# EUROPÄISCHE PATENTSCHRIFT

(11) **EP 1 964 063 B1**
(45) Veröffentlichungstag und Bekanntmachung des Hinweises auf die Patenterteilung: **21.03.2018**
(21) Anmeldenummer: 06829542.7
(22) Anmeldetag: 13.12.2006
(51) Int. Cl.: G06T 7/00, F16P 3/14

(54) **VERFAHREN ZUM KONFIGURIEREN EINER ÜBERWACHUNGSEINRICHTUNG ZUM ÜBERWACHEN EINES RAUMBEREICHS**
METHOD FOR THE CONFIGURATION OF A DEVICE USED FOR MONITORING A ROOM AREA
PROCEDE PERMETTANT LA CONFIGURATION D'UN DISPOSITIF DE SURVEILLANCE DESTINE A LA SURVEILLANCE D'UNE ZONE SPATIALE

(30) Priorität: 22.12.2005 DE 102005063217
(43) Veröffentlichungstag der Anmeldung: 03.09.2008
(73) Patentinhaber: Pilz GmbH & Co. KG, 73760 Ostfildern (DE)
(72) Erfinder: DOETTLING, Dietmar, 70771 Leinfelden-Echterdingen (DE); FUCHS, Oliver, 73732 Esslingen (DE); SUGRUE, James, Cork (IE)
(74) Vertreter: Witte, Weller & Partner Patentanwälte mbB
(86) Internationale Anmeldenummer: PCT/EP2006/011963
(87) Internationale Veröffentlichungsnummer: WO 2007/079883

(56) Entgegenhaltungen:
- EP-A- 1 422 496
- WO-A-01/39513
- JP-A- 9 282 459

## Beschreibung

Die vorliegende Erfindung betrifft ein Verfahren zum Konfigurieren einer Überwachungseinrichtung zum Überwachen eines Raumbereichs, insbesondere zum fehlersicheren Überwachen des Arbeitsbereichs einer automatisiert arbeitenden Maschine oder Anlage.

Die Erfindung betrifft ferner eine entsprechende Überwachungseinrichtung.

Klassischerweise werden die Arbeitsbereiche von automatisiert arbeitenden Maschinen oder Anlagen zum Schutz vor Unfällen mit mechanischen Absperrungen (Schutzzäunen, Schutztüren) und/oder mit Lichtschranken, Lichtgittern, Laserscannern und dergleichen abgesichert. Sobald eine Person oder ein Gegenstand die Absperrung durchbricht, wird die Maschine oder Anlage stillgesetzt oder anderweitig in einen gefahrlosen Zustand gebracht.

Bei komplexen Maschinen und Anlagen kann der Aufwand für eine solche Absicherung sehr hoch werden. Lichtschranken, Lichtgitter und dergleichen müssen sehr genau ausgerichtet und montiert werden. Außerdem können sie jeweils nur einen geraden Flächenabschnitt zwischen Lichtsender und Lichtempfänger überwachen, so dass eine Vielzahl von Lichtschranken, Lichtgittern und dergleichen benötigt werden, um einen komplexen Arbeitsbereich rundherum abzusichern. Darüber hinaus bieten mechanische Absperrungen und herkömmliche Lichtschranken, Lichtgitter und dergleichen nur eine begrenzte Flexibilität, so dass die Anpassung der Überwachungs- und Schutzräume an wechselnde Arbeitsumgebungen aufwändig ist.

Zur Vermeidung dieser Nachteile gibt es seit einiger Zeit Vorschläge, die Arbeitsräume von Gefahr bringenden Maschinen und Anlagen mit Hilfe von Kameras und modernen Methoden der Bildverarbeitung abzusichern. Ein solches Verfahren und eine entsprechende Vorrichtung sind beispielsweise in WO 2004/029502 A1 beschrieben. Die beschriebene Überwachungsvorrichtung verwendet zumindest zwei Bildaufnahmeeinheiten, die den abzusichernden Arbeitsbereich der Maschine zeitgleich zueinander aufnehmen. Die Bilder der beiden Bildaufnahmeeinheiten werden dreidimensionalen Szenenanalyseverfahren unterzogen, mit denen eine Entfernungsinformation bestimmt werden kann. Damit können Fremdobjekte, die in den gefährlichen Arbeitsbereich der Maschine eindringen, erkannt werden, um die Maschine abzuschalten oder anderweitig in einen sicheren Zustand zu bringen.

DE 10 2004 020 998 A1 beschreibt einen anderen Aspekt einer solchen Überwachungseinrichtung, nämlich eine vorteilhafte Realisierung der Abbildungsoptik für die Bildaufnahmeeinheit. Außerdem ist hier vorgeschlagen, innerhalb des überwachten Raumbereichs zumindest ein Referenzobjekt anzuordnen, um beispielsweise eine Beeinträchtigung der Erkennungssicherheit durch Verschmutzung, Wassertropfen und Anderes zu erkennen. Auch eine Manipulation der Überwachungseinrichtung durch eine bewusste oder unbewusste Änderung der Blickrichtung der Bildaufnahmeeinheit kann auf diese Weise erkannt werden.

EP 1 065 522 B1 beschreibt eine Überwachungseinrichtung, bei der die Laufzeiten von Lichtimpulsen mit einer Bildaufnahmeeinheit erfasst werden, um ein dreidimensionales Abbild des überwachten Raumbereichs zu erhalten. Durch einen Vergleich mit gespeicherten Referenzwerten kann dann festgestellt werden, ob ein Objekt in den überwachten Raumbereich eingedrungen ist.

Weitere Überwachungseinrichtungen unter Verwendung von Bildaufnahmeeinheiten sind in DE 197 09 799 A1 und DE 101 38 960 A1 beschrieben. Die erstgenannte Druckschrift schlägt eine stereoskopische Bildauswertung vor, um dreidimensionale Bildsignalsätze zu erzeugen und mit korrespondierenden Referenzsignalsätzen zu vergleichen. Objekte lassen sich erkennen, wenn die aktuelle Szenensituation vom Referenzmodell abweicht. DE 101 38 960 A1 schlägt ein Verfahren vor, bei dem Entfernungsinformationen anhand von Helligkeitsunterschieden bestimmt werden.

Aus DE 41 13 992 A1 ist schließlich ein Verfahren zum automatischen dreidimensionalen Überwachen von Gefahrenräumen bekannt, bei dem in der Überwachungsphase die Bilder von zumindest zwei elektronischen Bildaufnehmern rechnergestützt ausgewertet werden. Dabei sind die beteiligten Bildaufnehmer auf ein gemeinsames Koordinatensystem kalibriert, so dass für jeden Bildaufnehmer zu einem vorgegebenen Bildpunkt die Bildkoordinaten einer Projektion angegeben werden können. Dieses bekannte Verfahren arbeitet nach dem Prinzip gekreuzter Lichtschranken. In der Überwachungsphase werden die Überwachungsbildpunkte der Bildaufnehmer auf Veränderungen überprüft.

All diesen Überwachungseinrichtungen ist gemeinsam, dass sie versuchen, ein dreidimensionales Abbild des überwachten Raumbereichs aufzunehmen, um in Abhängigkeit davon zu entscheiden, ob die Maschine oder Anlage stillgesetzt werden muss. Der Begriff "dreidimensionales Abbild" bezeichnet hier ein Abbild des Raumbereichs, das zusätzlich zu dem eigentlichen (zweidimensionalen) Bild noch Entfernungsinformationen zu einzelnen oder allen Objekten im Raumbereich beinhaltet. Die Entfernungsinformationen können beispielsweise durch Laufzeitmessverfahren, Stereobildverarbeitung oder auf andere Weise gewonnen werden.

Überwachungseinrichtungen, die nach diesem Prinzip arbeiten, benötigen nur einen geringen Installations- und Montageaufwand, da sie den Raumbereich von einer zentralen Stelle aus beobachten können. Sie sind zudem sehr flexibel, da die einzelnen Überwachungsbereiche frei definiert werden können. Grundsätzlich können beliebig gekrümmte Verläufe und Konturen innerhalb des dreidimensionalen Abbildes als "virtuelle Schutzzäune" oder "virtuelle Schutzräume" definiert werden. Sobald ein Objekt in den virtuellen Schutzraum eindringt oder einen virtuellen Schutzzaun durchbricht, wird eine Sicherheitsfunktion ausgelöst, wie das von der Absicherung mit Schutztüren, Lichtschranken, Lichtgittern und dergleichen bekannt ist. Auch eine Änderung oder Anpassung der virtuellen Schutzbereiche im laufenden Betrieb der Maschine oder Anlage ist ohne weiteres möglich.

Die hohe Flexibilität aufgrund der virtuellen Schutzbereiche bereitet andererseits Schwierigkeiten beim Einrichten und Konfigurieren der Überwachungseinrichtung an einer Maschine oder Anlage. Bei der Montage eines Schutzzauns oder eines Lichtgitters an einer Maschine oder Anlage ist der Verlauf des Schutzbereichs aufgrund der mechanischen Anordnung der Absperrungen ohne weiteres erkennbar. Dies gilt jedoch nicht bei den Überwachungseinrichtungen mit virtuellen Schutzräumen.

Andererseits ist die Lage und der genaue Verlauf der virtuellen Schutzräume eine sicherheitsrelevante Eigenschaft, das heißt es muss sichergestellt sein, dass ein vorgesehener virtueller Schutzraum in der Realität auch exakt dort verläuft, wo er verlaufen soll. Andernfalls könnte es zu unerkannten Einbrüchen in den Gefahrenbereich der überwachten Anlage und damit zu schwerwiegenden Verletzungen und Personenschäden kommen. Es muss außerdem sichergestellt sein, dass in dem virtuellen Schutzzaun keine Lücken vorhanden sind, was aufgrund der hohen Gestaltungsfreiheit und Flexibilität der virtuellen Schutzräume schwierig ist.

Die oben schon erwähnte DE 41 13 992 A1 schlägt zum Einrichten eines Schutzraums vor, sog. Messmarkierungen auf die Raumpositionen zu legen, die einen Überwachungsbereich aufspannen sollen. Anschließend werden die Raumkoordinaten der Messmarkierungen anhand der aufgenommenen Bilder bestimmt. Die erhaltenen Raumkoordinaten spannen den Überwachungsbereich auf. Dieses Verfahren zum Einrichten von Überwachungsbereichen ist allerdings nicht optimal, weil die Einrichtung einen physischen Zugang zu den Markierungspunkten erfordert. Zudem offenbart DE 41 13 992 Al keine Mechanismen, um eine fehlersichere Konfiguration eines Überwachungsbereichs zu gewährleisten.

JP 09 282459 A offenbart eine Überwachungsvorrichtung, die einen Raumbereich überwacht sowie ein Verfahren zum Festlegen eines dreidimensionalen Überwachungsbereichs innerhalb des Raumbereichs. Der dreidimensionale Überwachungsbereich wird dabei anhand eines zweidimensionalen Abbildes des Raumbereichs bestimmt.

Vor diesem Hintergrund ist eine Aufgabe der vorliegenden Erfindung, ein Verfahren zum Konfigurieren einer Überwachungseinrichtung der zuvor beschriebenen Art anzugeben, mit dem sich Überwachungsbereiche möglichst einfach und vor allem fehlersicher konfigurieren lassen.

Gemäß einem Aspekt der Erfindung wird diese Aufgabe durch ein Verfahren zum Konfigurieren einer Überwachungseinrichtung zum Überwachen eines Raumbereichs gelöst, wobei die Überwachungseinrichtung zumindest eine Bildaufnahmeeinheit beinhaltet, die ein dreidimensionales Abbild des Raumbereichs erzeugt, mit den Schritten:
- Aufnehmen und Anzeigen des dreidimensionalen Abbildes des Raumbereichs,
- Bestimmen einer Vielzahl von Raumpunkten in dem dreidimensionalen Abbild, wobei das dreidimensionale Abbild ein Abbild des Raumbereichs ist, das zusätzlich zu einem zweidimensionalen Bild Entfernungsinformationen zu einzelnen oder allen Objekten im Raumbereich beinhaltet,
- Definieren einer Konfigurationsebene unter Verwendung der Raumpunkte,
- Erzeugen von zumindest einem veränderbaren Geometrieelement relativ zu der Konfigurationsebene, wobei das Geometrieelement in das Abbild eingeblendet wird,
- Erzeugen eines Datensatzes, der eine Transformation des Geometrieelementes in den Raumbereich repräsentiert, und
- Übertragen des Datensatzes an die Überwachungseinrichtung, wobei die Überwachungseinrichtung dazu ausgebildet ist, den Raumbereich unter Verwendung des Datensatzes zu überwachen.

Gemäß einem weiteren Aspekt der Erfindung wird ferner eine Überwachungseinrichtung zum Überwachen eines Raumbereichs bereitgestellt, mit zumindest einer Bildaufnahmeeinheit zum Erzeugen eines dreidimensionalen Abbildes des Raumbereichs, mit einer Auswerteeinheit zum Auslösen einer Steuerfunktion in Abhängigkeit von dem Abbild, und mit einem Konfigurationsgerät zum Konfigurieren der Auswerteeinheit, wobei das Konfigurationsgerät Folgendes beinhaltet:
- eine Anzeige zum Anzeigen des dreidimensionalen Abbildes des Raumbereichs, wobei das dreidimensionale Abbild ein Abbild des Raumbereichs ist, das zusätzlich zu einem zweidimensionalen Bild Entfernungsinformationen zu einzelnen oder allen Objekten im Raumbereich beinhaltet,
- ein erstes Konfigurationselement zum Bestimmen einer Vielzahl von Raumpunkten in dem dreidimensionalen Abbild,
- ein zweites Konfigurationselement zum Definieren einer Konfigurationsebene unter Verwendung der Raumpunkte,
- ein drittes Konfigurationselement zum Erzeugen von zumindest einem veränderbaren Geometrieelement relativ zu der Konfigurationsebene, wobei das dritte Konfigurationselement dazu ausgebildet ist, das veränderbare Geometrieelement in das Abbild einzublenden,
- ein viertes Konfigurationselement zum Erzeugen eines Datensatzes, der eine Transformation des Geometrieelements in den Raumbereich repräsentiert, und
- eine Kommunikationsschnittstelle zum Übertragen des Datensatzes an die Auswerteeinheit, wobei die Auswerteeinheit dazu ausgebildet ist, den Raumbereich unter Verwendung des Datensatzes zu überwachen.

Besonders vorteilhaft kann die vorliegende Erfindung mit Hilfe eines Computerprogramms mit Programmcode realisiert werden, der dazu ausgebildet ist, ein Verfahren der vorstehend beschriebenen Art durchzuführen, wenn das Computerprogramm auf einem Computer ausgeführt wird. In einer besonders bevorzugten Ausgestaltung der Erfindung wird ein handelsüblicher PC in Verbindung mit einem solchen Computerprogramm als Konfigurationsgerät der beschriebenen Überwachungseinrichtung verwendet.

Die vorliegende Erfindung verwendet ein "echtes" Abbild des überwachten Raumbereichs, um die Überwachungsbereiche in dem angezeigten Abbild zu definieren. In bevorzugten Ausgestaltungen wird ein "eingefrorenes" Echtbild des Raumbereichs verwendet, also ein in dem Konfigurationsgerät abgespeichertes Echtbild. Dies besitzt den Vorteil, dass die Konfiguration der Überwachungsbereiche in dem Konfigurationsgerät erfolgen kann, ohne dass das Konfigurationsgerät mit der Bildaufnahmeeinheit während der Konfiguration verbunden ist. Alternativ hierzu ist es jedoch auch möglich, die Konfiguration unter Verwendung eines Livebildes der zumindest einen Bildaufnahmeeinheit vorzunehmen.

Die Erfindung beinhaltet ferner, dass eine Vielzahl von Raumpunkten in dem Echtbild bzw. anhand des Echtbildes bestimmt werden und dass unter Verwendung dieser Raumpunkte eine Konfigurationsebene definiert wird. Das Bestimmen der Raumpunkte beinhaltet, dass die Raumkoordinaten von ausgewählten und/oder identifizierten Raumpunkten des dreidimensionalen Echtbildes bestimmt werden. Indem man nun eine Konfigurationsebene unter Verwendung dieser identifizierten Raumpunkte definiert, wird ein eindeutiger Zusammenhang zwischen der "virtuellen" Konfigurationsebene und dem realen Raumbereich geschaffen. Dieser Zusammenhang erlaubt es, virtuelle Geometrieelemente zu definieren, die in einer eindeutigen und bestimmten Beziehung zu dem realen Raumbereich stehen. Mit dem Erzeugen und Übertragen eines entsprechenden Datensatzes an die Überwachungseinrichtung bzw. die Auswerteeinheit einer solchen Überwachungseinrichtung werden die virtuellen Geometrieelemente gewissermaßen in den realen Raumbereich projiziert. Aufgrund der Konfigurationsebene, die unter Verwendung der realen Raumpunkte definiert wurde, ist diese Projektion umkehrbar eindeutig. Daher lassen sich Überwachungsbereiche in Form der Geometrieelemente zuverlässig und sicher konfigurieren.

Da die Geometrieelemente einerseits sehr einfach in oder auf dem Echtbild des Raumbereichs grafisch dargestellt werden können und andererseits eine eindeutige Projektion in den realen Raumbereich darstellen, ermöglicht die neue Vorgehensweise eine sehr einfache und Übersichtliche Konfiguration. Zudem kann der Anwender die Lage und Ausdehnung der Überwachungsbereiche sehr gut in Relation zu der realen Maschine oder Anlage beurteilen.

Insgesamt ermöglicht die vorliegende Erfindung daher eine einfache und sichere Konfiguration einer Überwachungseinrichtung der eingangs beschriebenen Art. Die oben genannte Aufgabe ist daher vollständig gelöst.

In einer Ausgestaltung der Erfindung werden eine Vielzahl von Setupmarken vor dem Aufnehmen des dreidimensionalen Abbildes in dem Raumbereich platziert, um die Raumpunkte in dem Abbild zu bestimmen.

Die Setupmarken sind Muster mit einer definierten Struktur, die in dem Abbild des Raumbereichs eindeutig und schnell erkannt werden können. Die Verwendung solcher Setupmarken erleichtert eine automatische Bestimmung der Raumpunkte und erhöht damit den Komfort beim Konfigurieren der Überwachungseinrichtung. Andererseits trägt die Verwendung von definierten Setupmarken dazu bei, Fehler bei der Bestimmung und Zuordnung der Raumpunkte zu vermeiden. Die Konfiguration der Überwachungseinrichtung wird daher noch einfacher und sicherer.

In einer weiteren Ausgestaltung werden die Setupmarken in dem Abbild automatisch gesucht und mit einem Symbol markiert.

Diese Ausgestaltung beinhaltet eine erste Kontrollmöglichkeit, da der Anwender anhand des (automatisch vergebenen) Symbols sehr gut überprüfen kann, ob die Lage der definierten Setupmarken von dem Konfigurationsgerät erkannt und akzeptiert wird. Außerdem wird die Konfiguration erleichtert und die für die Konfiguration benötigte Zeit wird reduziert.

In einer weiteren Ausgestaltung werden die Setupmarken vor der Inbetriebnahme der Überwachungseinrichtung entfernt.

Diese Ausgestaltung verbessert den Schutz der Überwachungseinrichtung vor bewussten oder unbewussten Manipulationen, da eine (erneute) Konfiguration ohne die Setupmarken verhindert ist.

In einer weiteren Ausgestaltung werden zumindest drei Raumpunkte bestimmt, die nicht auf einer gemeinsamen Geraden liegen.

Diese Ausgestaltung ermöglicht eine freie Ebenenwahl in Relation zu dem realen Raumbereich. Der Anwender kann die Konfigurationsebene in dem überwachten Raumbereich frei definieren. Damit kann die Konfiguration optimal an die individuellen Verhältnisse einer überwachten Maschine oder Anlage angepasst werden. Alternativ hierzu könnten ein oder zwei Aufhängepunkte der Konfigurationsebene jedoch auch fest vorgegeben sein, so dass der Anwender die Ebene dann nur eingeschränkt variieren kann.

In einer weiteren Ausgestaltung wird die Konfigurationsebene anhand der zumindest drei Raumpunkte bestimmt, und es wird ein vierter Raumpunkt bestimmt, der außerhalb der Konfigurationsebene liegt.

Diese Ausgestaltung erleichtert es, ein Anwenderkoordinatensystem zu definieren, dessen Ursprung auf oder unter einem Gegenstand, wie zum Beispiel einem Schaltschrank, liegt. Der Ursprung des Koordinatensystems wird in so einem Fall vorteilhafterweise auf die Projektion des vierten Raumpunktes in eine Konfigurationsebene gelegt, die durch die anderen drei Raumpunkte bestimmt wird. Diese Ausgestaltung erhöht die Flexibilität und vereinfacht die Konfiguration weiter.

In einer weiteren Ausgestaltung wird die Konfigurationsebene grafisch in das angezeigte Abbild eingeblendet.

In bevorzugten Ausführungsbeispielen wird die Konfigurationsebene in Form eines Gitternetzes oder in Form konzentrischer Kreise und/oder Radiallinien (ausgehend vom Ursprung eines in Relation zu der Ebene definierten Koordinatensystems) in das angezeigte Echtbild des Raumbereichs eingeblendet. Weiterhin ist es bevorzugt; wenn Sichtlinien der Bildaufnahmeeinheit(en), Schattenwürfe und andere Hilfslinien zur Definition der Überwachungsbereiche in das angezeigte Abbild eingeblendet werden. Die Einblendung solcher "künstlichen" Hilfselemente in das angezeigte Echtbild erleichtert die exakte Definition von Überwachungsräumen und trägt insbesondere dazu bei, eine lückenlose Absicherung zu realisieren.

In einer weiteren Ausgestaltung wird das veränderbare Geometrieelement grafisch in das angezeigte Abbild eingeblendet.

Die Einblendung der veränderbaren Geometrieelemente ermöglicht ein grafisches Bestimmen der Überwachungsbereiche, was besonders einfach und komfortabel ist. Auch die Überprüfung der eingerichteten Überwachungsbereiche ist auf diese Weise sehr schnell und zuverlässig möglich.

Vorteilhafterweise wird eine Bibliothek mit einer Vielzahl von vordefinierten Geometrieelementen bereitgestellt, aus denen der Anwender geeignete Geometrieelemente auswählen kann, wodurch die Konfiguration der Überwachungseinrichtung noch weiter beschleunigt wird. Des weiteren ist es bevorzugt, dass der Anwender die Bibliothek mit eigenen Geometrieelementen erweitern kann und/oder Geometrieelemente aus gängigen CAD Programmen importieren kann.

Außerdem ist es bevorzugt, wenn der Anwender bei der Konfiguration zwischen einer 2D-Ansicht und einer 3D-Ansicht hin und herschalten kann, um die Überwachungsbereiche in unterschiedlichen Ansichten zu beurteilen.

In einer weiteren Ausgestaltung besitzt das Geometrieelement Seitenflächen, die senkrecht zu der Konfigurationsebene stehen.

Im Gegensatz dazu ist es grundsätzlich auch möglich, Geometrieelemente zu bestimmen, die unter einem schrägen Winkel zu der Konfigurationsebene stehen. Die Beschränkung auf senkrecht stehende Geometrieelemente verhindert jedoch, dass die Überwachungsräume unübersichtlich werden, und sie trägt daher zu einer erhöhten Sicherheit beim Absichern einer Maschine oder Anlage bei.

In einer weiteren Ausgestaltung werden eine Vielzahl von Geometrieelementen bestimmt und miteinander kombiniert.

In dieser Ausgestaltung wird also eine Anordnung von Geometrieelementen bestimmt und die Konfiguration der Überwachungseinrichtung erfolgt unter Verwendung dieser Anordnung oder Kombination von mehreren einzelnen Überwachungsräumen. Diese Ausgestaltung ist eine sehr einfache und effiziente Möglichkeit, die dem Anwender einerseits eine hohe Flexibilität einräumt und die andererseits dazu beiträgt, eine übersichtliche und damit sichere Konfiguration zu ermöglichen.

In einer weiteren Ausgestaltung werden eine Vielzahl von Referenzmarken in dem Raumbereich platziert und mit dem Abbild aufgenommen, wobei zu jeder Referenzmarke eine Referenzposition bestimmt wird.

Vorteilhafterweise sind die Referenzmarken definierte Muster in dem Raumbereich, die sich von dem Muster der Setupmarken unterscheiden. Mit dieser Ausgestaltung kann die Justierung der zumindest einen Bildaufnahmeeinheit und auch deren fehlerfreie Funktion einfach überprüft werden.

In einer weiteren Ausgestaltung beinhaltet die Überwachungseinheit zumindest eine erste und eine zweite Bildaufnahmeeinheit, die räumlich versetzt zueinander angeordnet sind und ein erstes und ein teilweise versetztes zweites Abbild des Raumbereichs erzeugen, wobei ein gemeinsamer Bildbereich des ersten und zweiten Abbildes als dreidimensionales Abbild angezeigt wird.

Diese Information ist für die sichere Konfiguration von Überwachungsbereichen von großem Vorteil, weil die Beobachtungsbereiche von zwei räumlich versetzten Bildaufnahmeeinheiten stets einen - wenn auch nur gering - versetzten Blickwinkel haben. Für die Absicherung von gefährlichen Maschinen und Anlagen ist es jedoch wichtig, die Überwachungsbereiche so zu definieren, dass alle beteiligten Bildaufnahmeeinheiten den entsprechenden Raumbereich beobachten können. Diese Ausgestaltung ist besonders vorteilhaft, wenn die dreidimensionale Abbildung unter Verwendung von stereoskopischen Verfahren erzeugt wird. Sie kann jedoch auch bei anderen Überwachungseinrichtungen vorteilhaft eingesetzt werden, die beispielsweise lediglich aus Gründen der Redundanz zwei oder mehr Bildaufnahmeeinheiten verwenden.

In einer weiteren Ausgestaltung definiert der Datensatz einen Teil des Raumbereichs, der mit dem Geometrieelement korrespondiert, wobei ein Objekt in den Teil des Raumbereichs eingeführt wird, und wobei ein Liveabbild des Objekts beim Einführen in den Teil des Raumbereichs aufgenommen und archiviert wird.

In dieser Ausgestaltung erfolgt nach der Bestimmung der Geometrieelemente eine praktische Überprüfung, ob die Überwachungseinrichtung tatsächlich auch in der gewünschten Weise reagiert. Vorteilhafterweise wird diese Überprüfung mit einem Liveabbild aufgenommen und archiviert. Die Ausgestaltung stellt eine sehr einfache und komfortable Möglichkeit zur Verfügung, um die Konfiguration zu dokumentieren, was bei der Absicherung von Maschinen und Anlagen von großer Bedeutung ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Darstellung eines Anwendungsbeispiels, in dem eine Überwachungseinrichtung mit zwei Bildaufnahmeeinheiten den Arbeitsbereich eines Roboters absichert,
- Figur 2: das Anwendungsbeispiel aus Figur 1 in einer Draufsicht von oben,
- Figur 3: eine vereinfachte Darstellung einer Bildschirmanzeige beim Konfigurieren der Überwachungseinrichtung aus Fig. 1 und 2 gemäß einem bevorzugten Ausführungsbeispiel,
- Figur 4: eine weitere Bildschirmanzeige beim Konfigurieren der Überwachungseinrichtung aus Fig. 1 und 2 gemäß einem bevorzugten Ausführungsbeispiel, und
- Figur 5: ein Flussdiagramm zur Erläuterung eines bevorzugten Ausführungsbeispiels des erfindungsgemäßen Verfahrens.

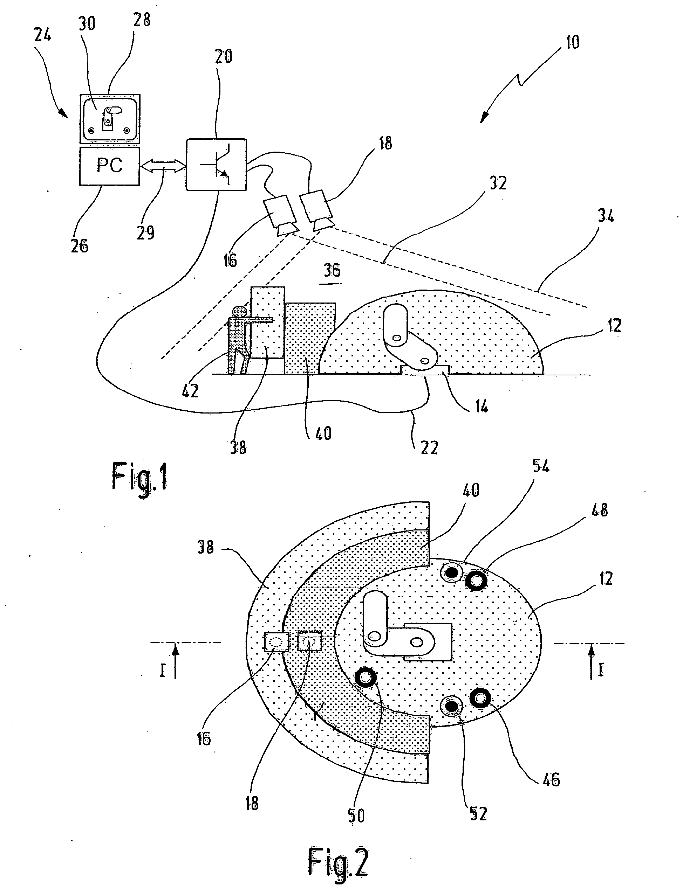

In Fig. 1 ist ein Ausführungsbeispiel einer Überwachungseinrichtung nach der vorliegenden Erfindung in seiner Gesamtheit mit der Bezugsziffer 10 bezeichnet. Die Überwachungseinrichtung 10 dient hier zum Überwachen des gefährlichen Arbeitsbereiches 12 eines Roboters 14. Es handelt sich um ein bevorzugtes Anwendungsbeispiel der neuen Überwachungseinrichtung. Die Erfindung ist hierauf jedoch nicht beschränkt und kann auch zum Absichern von anderen Maschinen und Anlagen verwendet werden.

Darüber hinaus kann die vorliegende Erfindung grundsätzlich auch auf anderen Gebieten eingesetzt werden, beispielsweise zum Konfigurieren eines Überwachungsbereiches zum Überwachen von wertvollen Gegenständen (Tresorraumüberwachung u.a.) und/oder zum Überwachen von Eingangsbereichen in öffentlichen Gebäuden, auf Flughäfen etc. Sie kann ferner zum Konfigurieren von Überwachungsbereichen im Rahmen der Qualitätskontrolle und Qualitätssicherung eingesetzt werden.

Die Überwachungseinrichtung 10 beinhaltet hier zwei Bildaufnahmeeinheiten 16, 18, die im Folgenden der Einfachheit halber als Kameras bezeichnet werden. In einem besonders bevorzugten Ausführungsbeispiel der vorliegenden Anmeldung beinhaltet die Überwachungseinrichtung drei Kameras, die zusammen ein etwa gleichseitiges Dreieck aufspannen. Mit Hilfe der Kameras 16, 18 wird ein dreidimensionales Abbild von dem Roboter 14 und seinem Umgebungsbereich aufgenommen, wobei die Entfernungsinformationen in dem bevorzugten Ausführungsbeispiel der Anmelderin mit Hilfe von dreidimensionalen Szeneanalyseverfahren gewonnen werden, wie dies in der eingangs erwähnten WO 2004/029502 A1 beschrieben ist, auf die hier vollumfänglich Bezug genommen ist.

Alternativ hierzu kann die vorliegende Erfindung jedoch auch bei Überwachungseinrichtungen verwendet werden, die ein dreidimensionales Abbild mit Hilfe von Laufzeitmessverfahren oder auf andere Weise aufnehmen.

Bevorzugt ist es, wenn die Kameras 16, 18 Grauwert- und/oder Farbbilder des überwachten Raumbereichs aufnehmen. Grundsätzlich können die Kameras 16, 18 jedoch auch Infrarotbilder oder Bilder in einem anderen Wellenlängenbereich aufnehmen.

Mit der Bezugsziffer 20 ist eine Auswerteeinheit bezeichnet, die die Bilder der Kameras 16, 18 empfängt und auswertet, um in Abhängigkeit davon den Roboter 14 still zu setzen. Dementsprechend ist die Auswerteeinheit 20 über eine Verbindung 22 mit dem Roboter 14 verbunden.

Die Auswerteeinheit 20 kann Teil der Betriebssteuerung des Roboters 14 sein. Bevorzugt handelt es sich hier jedoch um eine separate Auswerteeinheit, die allein die sicherheitstechnische Überwachung des Roboters übernimmt. Die Betriebssteuerung (hier nicht dargestellt) des Roboters 14 ist dann separat realisiert.

Mit der Bezugsziffer 24 ist ein Konfigurationsgerät bezeichnet, mit dessen Hilfe die Überwachungseinrichtung 10 konfiguriert werden kann. Gemäß einem bevorzugten Ausführungsbeispiel beinhaltet das Konfigurationsgerät einen herkömmlichen PC 26 mit einer Anzeige 28. Der PC 26 ist über eine Datenverbindung 29 mit der Auswerteeinheit 20 verbunden. In einem bevorzugten Ausführungsbeispiel ist die Datenverbindung 29 eine Ethernet-Verbindung oder eine SafetyBus®-Verbindung. Letzteres ist ein speziell für sicherheitstechnische Anwendungen entwickeltes Feldbussystem der vorliegenden Anmelderin. In anderen Ausführungsbeispielen ist das Konfigurationsgerät 24 in die Auswerteeinheit 20 integriert. Die Kommunikationsschnittstelle zwischen der Auswerteeinheit und dem Konfigurationsgerät ist in diesem Fall eine interne Schnittstelle zwischen den beiden Funktionseinheiten, die beispielsweise eine Softwareschnittstelle sein kann.

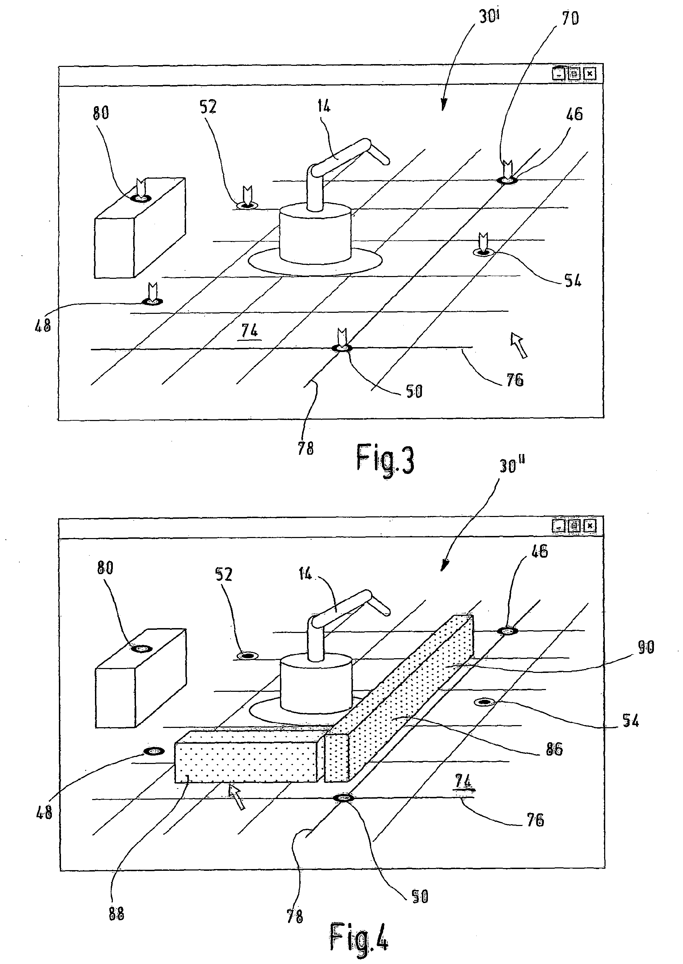

Auf der Anzeige 28 ist ein Abbild 30 des überwachten Raumbereichs 12 dargestellt. Es handelt sich gemäß einem bevorzugten Ausführungsbeispiel um ein "eingefrorenes" Echtbild des mit den Kameras 16, 18 aufgenommenen Raumbereichs 12. Die Konfiguration der Überwachungsbereiche erfolgt in dem bevorzugten Ausführungsbeispiel mit Hilfe von grafisch erstellten Geometrieelementen, die in das Abbild 30 eingeblendet werden (siehe Fig. 3 und 4).

Mit den Bezugsziffern 32, 34 sind die Aufnahmebereiche der Kameras 16, 18 symbolisch dargestellt. Wie leicht einzusehen ist, sind die Aufnahmebereiche 32, 34 der beiden Kameras 16, 18 leicht versetzt zueinander und es gibt einen gemeinsamen, überlappenden Aufnahmebereich, der mit der Bezugsziffer 36 bezeichnet ist. Die Konfiguration und Überwachung des Raumbereichs erfolgt vorteilhafterweise nur für den gemeinsamen Aufnahmebereich 36.

Mit der Bezugsziffer 38 ist ein erster Überwachungsbereich bezeichnet, der nachfolgend als Warnbereich bezeichnet wird. Bezugsziffer 40 bezeichnet einen zweiten Überwachungsbereich, der nachfolgend als Schutz- oder Stoppbereich bezeichnet wird.

Wie in Figur 1 beispielhaft dargestellt ist, bilden die Überwachungsbereiche 38, 40 einen virtuellen Zaun, der ein unbemerktes Eindringen einer Person 42 in den Arbeitsbereich 12 des Roboters 14 verhindert. Wie anhand des Warnbereichs 38 dargestellt ist, kann dieser Zaun "schweben", das heißt er muss nicht notwendigerweise auf dem Boden aufsitzen.

Figur 2 zeigt die Lage des Warn- und Schutzbereichs 38, 40 von oben. Wie dargestellt ist, umgeben die beiden Bereiche den Arbeitsbereich des Roboters 12 etwa halbkreisförmig. Der offenliegende Teil des Arbeitsbereichs 12 kann beispielsweise durch mechanische Absperrungen gesichert sein (hier nicht dargestellt). Es versteht sich, dass die Überwachungsbereiche 38, 40 den Arbeitsbereich 12 des Roboters 14 auch vollständig umgeben können oder einen anderen Verlauf aufweisen können.

Mit den Bezugsziffern 46, 48, 50 sind drei Setupmarken bezeichnet, die auf dem Boden ausgelegt sind, um das Verfahren zum Konfigurieren der Überwachungseinrichtung 10 in der nachfolgend beschriebenen Weise durchzuführen. Vorteilhafterweise werden diese Setupmarken nach dem Konfigurationsvorgang entfernt.

Mit den Bezugsziffern 52, 54 sind ferner zwei Referenzmarken dargestellt, die ebenfalls im Aufnahmebereich 36 der Kameras 16, 18 angeordnet sind. Im Gegensatz zu den Setupmarken verbleiben die Referenzmarken 52, 54 im gemeinsamen Aufnahmebereich 36. Mit ihrer Hilfe kann im Betrieb der Überwachungseinrichtung 10 überprüft werden, ob sich die Aufnahmebereiche 32, 34 der Kameras 16, 18 verschoben haben und/oder ob die Optiken der Kameras 16, 18 verschmutzt sind.

Wie in Figur 2 dargestellt ist, unterscheiden sich die Setupmarken 46, 48, 50 und die Referenzmarken 52, 54 erkennbar voneinander. In beiden Fällen beinhalten die Marken jedoch ein definiertes, kontrastreiches Muster, das eine einfache Erkennung in dem aufgenommenen Abbild 30 ermöglicht.

Nachfolgend wird anhand der Fig. 3, 4 und 5 ein bevorzugtes Ausführungsbeispiel zum Konfigurieren der Überwachungseinrichtung 10 beschrieben. Gleiche Bezugszeichen bezeichnen dabei dieselben Elemente wie zuvor.

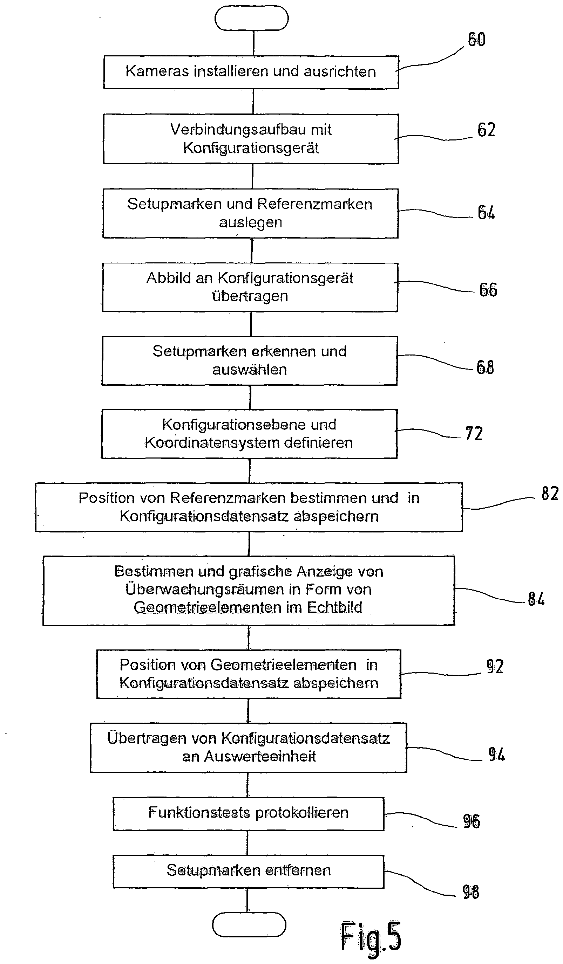

In den Fig. 3 und 4 sind zwei Bildschirmansichten dargestellt, die Zwischenschritte beim Konfigurieren der Überwachungseinrichtung 10 mit Hilfe des Konfigurationsgerätes 24 zeigen. Fig. 5 erläutert die einzelnen Verfahrensschritte anhand eines Flussdiagramms.

Gemäß Schritt 60 müssen zunächst die Kameras 16, 18 installiert und auf den Arbeitsbereich 12 des Roboters 14 ausgerichtet werden. Bevorzugt werden die beiden Kameras zunächst groß mechanisch ausgerichtet. Anschließend erfolgt eine "elektronische Feinjustierung", d.h. der exakte Überwachungsbereich wird elektronisch ausgewählt. Dann erfolgt gemäß Schritt 62 ein Verbindungsaufbau des Konfigurationsgerätes 24 zu der Auswerteeinheit 20. Gemäß Schritt 64 werden außerdem die Setupmarken 46, 48, 50 und die Referenzmarken 52, 54 im Aufnahmebereich 36 der beiden Kameras 16, 18 platziert. Gemäß Schritt 66 wird anschließend ein Abbild mit den beiden Kameras 16, 18 aufgenommen und an das Konfigurationsgerät 24 übertragen. Das Abbild 30 (mit ergänzenden Entfernungsinformationen, die beispielsweise aus einer Stereobildverarbeitung gewonnen werden) wird in einem Speicher (hier nicht dargestellt) des Konfigurationsgerätes 25 gespeichert und für die einfache Konfiguration von Überwachungsbereichen auf der Anzeige 28 angezeigt. Die Fig. 3 und 4 zeigen das Abbild 30' bzw. 30" an den nachfolgend erläuterten Zwischenschritten des neuen Verfahrens.

Gemäß Schritt 68 werden zunächst die Setupmarken 46, 48, 50 in dem Abbild 30 gesucht. Vorzugsweise erfolgt diese Suche automatisch mit Hilfe eines geeigneten Bildverarbeitungsalgorithmus, der die bekannten Muster der Setupmarken 46, 48, 50 in dem Abbild sucht. Wenn der Algorithmus eine Setupmarke erkannt hat, wird sie mit einem Symbol 70 markiert, so dass der Anmelder erkennen kann, ob der Algorithmus die "richtigen" Setupmarken erkannt hat und deren Position richtig bestimmt hat. Alternativ oder ergänzend hierzu kann das Verfahren grundsätzlich auch mit "natürlichen" Setupmarken, also auf Basis von vorhandenen Objektpunkten, durchgeführt werden.

In der Darstellung in Fig. 3 ist das Symbol 70 ein senkrechter Pfeil, der auf den berechneten Mittelpunkt jeder Setupmarke 46, 48, 50 zeigt. Es können jedoch auch andere Symbole 70 sein, beispielsweise eine rahmenförmige Markierung um jede erkannte Setupmarke.

Gemäß Schritt 72 wird dann eine Konfigurationsebene 74 definiert, indem drei Setupmarken 46, 48, 50 ausgewählt werden. Die Konfigurationsebene 74 ist hier mit einem Netzgitter symbolisiert, das in das eingefrorene Echtbild des Raumbereichs eingeblendet wird.

Außerdem wird ein Koordinatensystem definiert, das in den Fig. 3 und 4 anhand der Koordinatenachsen 76, 78 dargestellt ist. In dem hier beschriebenen Ausführungsbeispiel liegt der Ursprung des Koordinatensystems auf der Setupmarke 50. Der Anwender könnte jedoch auch eine andere Setupmarke als Ursprung des Koordinatensystems wählen.

Insbesondere ermöglicht ein bevorzugtes Ausführungsbeispiel der Erfindung, den Ursprung des Koordinatensystems in die Projektion der vierten Setupmarke 80 auf die Konfigurationsebene zu legen. Die Setupmarke 80 liegt hier beispielsweise auf einem Schaltschrank. In dem bevorzugten Ausführungsbeispiel kann der Anwender außerdem die Richtung der Koordinatenachsen frei wählen.

Gemäß Schritt 82 wird außerdem die Position der Referenzmarken 52, 54 bestimmt und in einem Konfigurationsdatensatz abgespeichert. Wenn mehrere Referenzmarken 52, 54 im gemeinsamen Aufnahmebereich 36 der Kameras 16, 18 angeordnet sind, kann der Anwender alle oder einzelne Referenzmarken auswählen oder abwählen. Nur die Positionen der ausgewählten Referenzmarken 32, 54 werden später im Betrieb der Überwachungseinrichtung 10 überwacht und ausgewertet.

Gemäß Schritt 84 erfolgt als nächstes die Bestimmung und grafische Anzeige von Überwachungsräumen in Form von Geometrieelementen 66, 68, die in das Echtbild 30" eingeblendet werden.

In einem bevorzugten Ausführungsbeispiel der Erfindung kann der Anwender die Geometrieelemente 86, 88 grafisch mit Hilfe einer Maus in dem Echtbild 30" erzeugen. In einem besonders bevorzugten Ausführungsbeispiel wird dem Anwender eine Bibliothek von vorbereiteten Geometrieelementen (hier nicht dargestellt) zur Verfügung gestellt, aus der er geeignete Geometrieelemente auswählen und parametrieren kann.

Des Weitern ist es bevorzugt, wenn jedes Geometrieelement Seitenflächen 90 aufweist, die senkrecht zu der Konfigurationsebene 74 stehen, weil auf diese Weise einfache Überwachungsräume erzeugt werden, deren Anschluss aneinander leicht zu überprüfen ist. Im anderen Ausführungsbeispiel ist es jedoch möglich, dass der Anwender auch die Winkellage der Seitenwände 90 und/oder den Konturverlauf der Seitenwände 90 parametrieren kann.

In dem Ausführungsbeispiel gemäß Fig. 4 ist vorgesehen, dass der Anwender mehrere Geometrieelemente 86, 88 erzeugen kann, die zu einer Anordnung von Geometrieelementen kombiniert werden. Auf diese Weise lassen sich komplexe Überwachungsbereiche sehr leicht aus relativ einfachen Geometrieelementen 86, 88 konstruieren.

Für jedes Geometrieelement 86, 88 muss der Anwender in einem bevorzugten Ausführungsbeispiel der Erfindung noch festlegen, ob es sich um eine Warnzone 38, eine Schutzzone 40 oder um einen Bereich handelt, der von der Überwachungseinrichtung 10 überhaupt nicht überwacht und ausgewertet werden soll ("blanking").

Wenn die Bestimmung der einzelnen Geometrieelemente 86, 88 abgeschlossen ist, werden gemäß Schritt 92 die Positionen der Geometrieelemente 86, 88 in dem Konfigurationsdatensatz abgespeichert. Dabei wird die Position jedes Geometrieelements 86, 88 in Bezug auf die Konfigurationsebene 74 bestimmt. Aufgrund der definierten Beziehung zwischen der Konfigurationsebene 74 und den realen Setupmarken 46, 48, 50 besteht ein eindeutiger Zusammenhang zwischen der Lage der virtuellen Geometrieelemente (= Überwachungsbereiche) und den realen Raumkoordinaten.

Die Position der Geometrieelemente wird im Schritt 92 so in dem Konfigurationsdatensatz abgespeichert, dass die Auswerteeinheit 20 die Lage und Ausdehnung der Geometrieelemente 86, 88 als Überwachungsbereich berücksichtigt.

Gemäß Schritt 94 wird der Konfigurationsdatensatz anschließend über die Datenverbindung 29 an die Auswerteeinheit 20 übertragen.

Gemäß Schritt 96 erfolgt anschließend ein Funktionstest der konfigurierten Überwachungsbereiche, indem eine Person 42 die Überwachungsbereiche mit Hilfe eines Prüfkörpers "verletzt". Dieser Vorgang wird mit den Kameras 16, 18 ebenso aufgenommen, wie im Überwachungsbetrieb der Überwachungseinrichtung 10. Die aufgenommenen Bilder werden an das Konfigurationsgerät 24 übertragen. Sobald die Auswerteeinheit 20 eine Verletzung eines Überwachungsbereichs detektiert, wird ein entsprechendes Signal an das Konfigurationsgerät 24 übertragen. Das Konfigurationsgerät 24 speichert dann das zugehörige Echtbild und archiviert dieses, um ein Funktionstestprotokoll zu erstellen.

Wenn sämtliche Funktionstests erfolgreich abgeschlossen sind, kann die Konfiguration der Überwachungseinrichtung 10 beendet werden. Vorteilhafterweise werden gemäß Schritt 98 noch die Setupmarken 46, 48, 50 entfernt, so dass eine Manipulation der Konfiguration verhindert ist.

Vorteilhafterweise erfolgt die Übertragung des Konfigurationsdatensatzes von dem Konfigurationsgerät 24 an die Auswerteeinheit 20 unter Verwendung von Fehler sichernden Maßnahmen. Diese können einen oder mehrere der folgenden Schritte beinhalten:
1. Authentifizierung des sendenden Konfigurationsgerätes,
2. eindeutige Bezeichnung der empfangenen Auswerteeinheit 20,
3. Übertragen einer Verbindungsnummer, um bei Befehlssequenzen eine fortdauernde Berechtigung sicherzustellen,
4. Sicherstellen der Datenrepräsentation und Konsistenz unter Verwendung von Datensicherungsmaßnahmen wie CRC, und
5. Verschlüsselung der Nutzdaten, um Vertraulichkeit zu gewährleisten.

Insgesamt werden folgende Sicherheitsaspekte und -mechanismen realisiert:
- Vertraulichkeit: Eine Nachricht soll ausschließlich für den jeweils adressierten Empfänger lesbar sein; hierzu wird eine Verschlüsselung verwendet,
- Berechtigung: Der Bediener, der das System konfiguriert, muss seine Berechtigung nachweisen,
- Datenkonsistenz: Eine Datenübermittlung zwischen dem Konfigurationsgerät und der Auswerteeinheit muss ohne Veränderung am Empfänger ankommen,
- Glaubwürdigkeit: Eine Nachricht muss nachprüfbar durch den vermeintlichen Sender erstellt worden sein, d.h. der Sender muss sich nachprüfbar identifizieren, und
- Verbindlichkeit: Der Sender einer Nachricht soll seine Urheberschaft für eine von ihm erstellte Nachricht nicht mehr leugnen können; dies wird vorzugsweise durch eine geeignete Unterschrift realisiert.

Des Weiteren ist es bevorzugt, wenn die Auswerteeinheit 20 die empfangene Schutzraumkonfiguration selbst überprüft. Ein erster Überprüfungsschritt beinhaltet eine Plausibilitätsprüfung. Insbesondere wird hierbei überprüft, ob alle konfigurierten Überwachungsräume innerhalb des gemeinsamen Aufnahmebereichs 36 liegen.

Des Weiteren ist es bevorzugt, wenn die Auswerteeinheit 20 die Berechnung der Überwachungsbereiche anhand der vom Anwender in das Konfigurationsgerät 24 eingegebenen Daten nochmals wiederholt, um auf diese Weise eine Redundanz bereitzustellen, die die Erkennung von Fehlern ermöglicht. Die Auswerteeinheit 20 benötigt dazu lediglich die vom Anwender eingegebenen Konfigurationsdaten, die über die Datenverbindung 29 an die Auswerteeinheit 20 übertragen werden können.

Die Überprüfung der Konfiguration in und mit Hilfe der Auswerteeinheit 20 ist besonders von Vorteil, wenn das Konfigurationsgerät 24 einen herkömmlichen und damit nicht-sicheren PC beinhaltet.

## Patentansprüche

1. Verfahren zum Konfigurieren einer Überwachungseinrichtung (10) zum Überwachen eines Raumbereichs (36), wobei die Überwachungseinrichtung (10) zumindest eine Bildaufnahmeeinheit (16, 18) beinhaltet, die ein dreidimensionales Abbild (30) des Raumbereichs (12) erzeugt, mit den Schritten:
- Aufnehmen und Anzeigen des dreidimensionalen Abbildes (30) des Raumbereichs (12), **gekennzeichnet durch**
- Bestimmen einer Vielzahl von Raumpunkten (46, 48, 50) in dem dreidimensionalen Abbild (30), wobei das dreidimensionalen Abbild ein Abbild des Raumbereichs ist, das zusätzlich zu einem zweidimensionalen Bild Entfernungsinformation zu einzelnen oder allen Objekten im Raumbereich beinhaltet,
- Definieren einer Konfigurationsebene (74) unter Verwendung der Raumpunkte (46, 48, 50),
- Erzeugen von zumindest einem veränderbaren Geometrieelement (86, 88) relativ zu der Konfigurationsebene (74), wobei das Geometrieelement (86, 88) in das Abbild (30) eingeblendet wird,
- Erzeugen eines Datensatzes, der eine Transformation des Geometrieelements (86, 88) in den Raumbereich (12) repräsentiert, und
- Übertragen des Datensatzes an die Überwachungseinrichtung (10), wobei die Überwachungseinrichtung (10) dazu ausgebildet ist, den Raumbereich (12) unter Verwendung des Datensatzes zu überwachen.

2. Verfahren nach Anspruch 1, wobei eine Vielzahl von Setupmarken (46, 48, 50) in dem Raumbereich (12) platziert werden, um die Raumpunkte in dem Abbild (30) zu bestimmen.

3. Verfahren nach Anspruch 2, wobei die Setupmarken (46, 48, 50) in dem Abbild automatisch gesucht und mit einem Symbol (70) markiert werden.

4. Verfahren nach Anspruch 2 oder 3, wobei die Setupmarken (46, 48, 50) vor der Inbetriebnahme der Überwachungseinrichtung (10) entfernt werden.

5. Verfahren nach einem der Ansprüche 1 bis 4, wobei zumindest drei Raumpunkte (46, 48, 50) bestimmt werden, die nicht auf einer gemeinsamen Geraden liegen.

6. Verfahren nach Anspruch 5, wobei die Konfigurationsebene (74) anhand der zumindest drei Raumpunkte (46, 48, 50) bestimmt wird und wobei ein vierter Raumpunkt (80) bestimmt wird, der außerhalb der Konfigurationsebene (74) liegt.

7. Verfahren nach einem der Ansprüche 1 bis 6, wobei die Konfigurationsebene (74) grafisch in das angezeigte Abbild (30') eingeblendet wird.

8. Verfahren nach einem der Ansprüche 1 bis 7, wobei das veränderbare Geometrieelement (86, 88) grafisch in das angezeigte Abbild (30") eingeblendet wird.

9. Verfahren nach einem der Ansprüche 1 bis 8, wobei das Geometrieelement (86, 88) Seitenflächen (90) besitzt, die senkrecht zu der Konfigurationsebene (74) stehen.

10. Verfahren nach einem der Ansprüche 1 bis 9, wobei eine Vielzahl von Geometrieelementen (86, 88) bestimmt und miteinander kombiniert werden.

11. Verfahren nach einem der Ansprüche 1 bis 10, wobei eine Vielzahl von Referenzmarken (52, 54) in dem Raumbereich (12) platziert und mit dem Abbild (30') aufgenommen werden, und wobei zu jeder Referenzmarke (52, 54) eine Referenzposition bestimmt wird.

12. Verfahren nach einem der Ansprüche 1 bis 11, wobei die Überwachungseinheit (10) zumindest eine erste und eine zweite Bildaufnahmeeinheit (16, 18) beinhaltet, die räumlich versetzt zueinander angeordnet sind und ein erstes und ein teilweise versetztes zweites Abbild (32, 34) des Raumbereichs (12) erzeugen, wobei ein gemeinsamer Bildbereich (36) des ersten und zweiten Abbildes (32, 34) als dreidimensionales Abbild (30) angezeigt wird.

13. Verfahren nach einem der Ansprüche 1 bis 12, wobei der Datensatz einen Teil (38, 40) des Raumbereichs (12) definiert, der mit dem Geometrieelement (46, 48, 50) korrespondiert, wobei ein Objekt (42) in den Teil (38) des Raumbereichs eingeführt wird, und wobei ein Liveabbild des Objekts (42) beim Einführen in den Teil (38) aufgenommen und archiviert wird.

14. Computerprogramm mit Programmcode, der dazu ausgebildet ist, ein Verfahren nach einem der Ansprüche 1 bis 13 durchzuführen, wenn das Computerprogramm auf einem Computer ausgeführt wird.

15. Überwachungseinrichtung zum Überwachen eines Raumbereichs (12), mit zumindest einer Bildaufnahmeeinheit (16, 18) zum Erzeugen eines dreidimensionalen Abbildes (30) des Raumbereichs, mit einer Auswerteeinheit (20) zum Auslösen einer Steuerfunktion in Abhängigkeit von dem Abbild (30), und mit einem Konfigurationsgerät (24) zum Konfigurieren der Auswerteeinheit (20), wobei das Konfigurationsgerät (24) Folgendes beinhaltet:
- eine Anzeige (28) zum Anzeigen des dreidimensionalen Abbildes des Raumbereichs (30), **gekennzeichnet durch**
- ein erstes Konfigurationselement (68) zum Bestimmen einer Vielzahl von Raumpunkten (46, 48, 50) in dem dreidimensionalen Abbild (30), wobei das dreidimensionale Abbild ein Abbild des Raumbereichs ist, das zusätzlich zu einem zweidimensionalen Bild Entfernungsinformationen zu einzelnen oder allen Objekten im Raumbereich beinhaltet,
- ein zweites Konfigurationselement (72) zum Definieren einer Konfigurationsebene (74) unter Verwendung der Raumpunkte (46, 48, 50),
- ein drittes Konfigurationselement (84) zum Erzeugen von zumindest einem veränderbaren Geometrieelement (86, 88) relativ zu der Konfigurationsebene (74), wobei das dritte Konfigurationselement (84) dazu ausgebildet ist, das veränderbare Geometrieelement (86, 88) in das Abbild (30) einzublenden,
- ein viertes Konfigurationselement (92) zum Erzeugen eines Datensatzes, der eine Transformation des Geometrieelements (86, 88) in den Raumbereich repräsentiert, und
- eine Kommunikationsschnittstelle (29) zum Übertragen des Datensatzes an die Auswerteeinheit (20), wobei die Auswerteeinheit (20) dazu ausgebildet ist, den Raumbereich (12) unter Verwendung des Datensatzes zu überwachen.

## Claims

1. A method for configuring a monitoring device (10) for monitoring a spatial area (36), wherein the monitoring device (10) comprises at least one image pickup unit (16, 18) which generates a three-dimensional image (30) of the spatial area (12), comprising the steps of:
- recording and displaying the three-dimensional image (30) of the spatial area (12),
**characterized by**
- determining a plurality of spatial points (46, 48, 50) in the three-dimensional image (30),
wherein the three-dimensional image (30) is an image of the spatial area which, in addition to a two-dimensional image, also comprises range information to individual or all objects in the spatial area.
- defining a configuration plane (74) using the spatial points (46, 48, 50),
- generating at least one variable geometry element (86, 88) relative to the configuration plane (74), the geometry element (86, 88) being superimposed into the image (30),
- generating a data record which represents a transformation of the geometry element (86, 88) into the spatial area (12), and
- transferring the data record to the monitoring device (10), with the monitoring device (10) being designed for monitoring the spatial area (12) using the data record.

2. The method of Claim 1, wherein a plurality of setup marks (46, 48, 50) are placed in the spatial area (12) in order to determine the spatial points in the image (30).

3. The method of Claim 2, wherein the setup marks (46, 48, 50) are automatically sought in the image and marked with a symbol (70).

4. The method of Claim 2 or 3, wherein the setup marks (46, 48, 50) are removed before the monitoring device (10) is taken into operation.

5. The method of one of Claims 1 to 4, wherein at least three spatial points (46, 48, 50) are determined which are not located on a common straight line.

6. The method of Claim 5, wherein the configuration plane (74) is determined by means of the at least three spatial points (46, 48, 50) and wherein a fourth spatial point (80) is determined which is outside of the configuration plane (74).

7. The method of one of Claims 1 to 6, wherein the configuration plane (74) is graphically superimposed into the displayed image (30').

8. The method of one of Claims 1 to 7, wherein the variable geometry element (86, 88) is graphically superimposed into the displayed image (30").

9. The method of one of Claims 1 to 8, wherein the geometry element (86, 88) has side faces (90) which are perpendicular to the configuration plane (74).

10. The method of one of Claims 1 to 9, wherein a plurality of geometry elements (86, 88) are determined and are combined with one another.

11. The method of one of Claims 1 to 10, wherein a plurality of reference marks (52, 54) are placed in the spatial area (12) and are recorded together with the image (30'), and wherein a reference position is determined for each reference mark (52, 54).

12. The method of one of Claims 1 to 11, wherein the monitoring device (10) comprises at least a first and a second image pickup unit (16, 18) which are arranged spatially offset with respect to one another and generate a first and a partially offset second image (32, 34) of the spatial area (12), wherein a common image area (36) of the first and second image (32, 34) is displayed as three-dimensional image (30).

13. The method of one of Claims 1 to 12, wherein the data record defines a section (38, 40) of the spatial area (12) which corresponds to the geometry element (46, 48, 50), wherein an object (42) is introduced into the section (38) of the spatial area, and wherein a live image of the object (42) is recorded during said introduction into the section (38) and is archived.

14. A computer program having program code which is designed for performing a method according to one of Claims 1 to 13 when the computer program is executed on a computer.

15. A monitoring device for monitoring a spatial area (12), comprising at least one image pickup unit (16, 18) for generating a three-dimensional image (30) of the spatial area, comprising an evaluating unit (20) for triggering a control function in dependence on the image (30), and comprising a configuration device (24) for configuring the evaluating unit (20), the configuration device (24) comprising the following:
- a display (28) for displaying the three-dimensional image of the spatial area (30),
**characterized by**
- a first configuration element (68) for determining a plurality of spatial points (46, 48, 50) in the three-dimensional image (30),
wherein the three-dimensional image (30) is an image of the spatial area which, in addition to a two-dimensional image, also comprises range information to individual or all objects in the spatial area.
- a second configuration element (72) for defining a configuration plane (74) by using the spatial points (46, 48, 50),
- a third configuration element (84) for generating at least one variable geometry element (86, 88) relative to the configuration plane (74), wherein the third configuration element (84) is arranged for superimposing the variable geometry element (86, 88) into the image (30),
- a fourth configuration element (92) for generating a data record which represents a transformation of the geometry element (86, 88) into the spatial area, and
- a communication interface (29) for transferring the data record to the evaluating unit (20), with the evaluating unit (20) being designed for monitoring the spatial area (12) by using the data record.

## Revendications

1. Procédé de configuration d'un dispositif de surveillance (10) destiné à surveiller une région spatiale (36), dans lequel le dispositif de surveillance (10) comporte au moins une unité d'acquisition d'image (16, 18) qui génère une image tridimensionnelle (30) de la région spatiale (12), comprenant les étapes consistant à :
- acquérir et afficher l'image tridimensionnelle (30) de la région spatiale (12), **caractérisé par** le fait de
- déterminer une pluralité de points spatiaux (46, 48, 50) dans l'image tridimensionnelle (30),
dans lequel l'image tridimensionnelle est une image de la région spatiale qui contient, en plus d'une image bidimensionnelle, des informations de distance par rapport à des objets individuels ou à la totalité des objets présents dans la région spatiale,
- définir un plan de configuration (74) par utilisation des points spatiaux (46, 48, 50),
- générer au moins un élément de géométrie modifiable (86, 88) par rapport au plan de configuration (74), dans lequel l'élément de géométrie (86, 88) est intégré à l'image (30),
- générer un ensemble de données qui représente une transformation de l'élément géométrique (86, 88) dans la région spatiale (12), et
- transmettre l'ensemble de données au dispositif de surveillance (10), dans lequel le dispositif de surveillance (10) est conçu pour surveiller la région spatiale (12) par utilisation de l'ensemble de données.

2. Procédé selon la revendication 1, dans lequel une pluralité de repères de configuration (46, 48, 50) sont placés dans la région spatiale (12) afin de déterminer les points spatiaux dans l'image (30).

3. Procédé selon la revendication 2, dans lequel les repères de configuration (46, 48, 50) sont automatiquement recherchés dans l'image et repérés par un symbole (70).

4. Procédé selon la revendication 2 ou 3, dans lequel les repères de configuration (46, 48, 50) sont éliminés avant la mise en fonctionnement du dispositif de surveillance (10).

5. Procédé selon l'une des revendications 1 à 4, dans lequel au moins trois points spatiaux (46, 48, 50) qui ne se situent pas sur une droite commune sont déterminés.

6. Procédé selon la revendication 5, dans lequel le plan de configuration (74) est déterminé sur la base des au moins trois points spatiaux (46, 48, 50) et dans lequel un quatrième point spatial (80) qui se situe en dehors du plan de configuration (74) est déterminé.

7. Procédé selon l'une des revendications 1 à 6, dans lequel le plan de configuration (74) est intégré graphiquement à l'image (30') affichée.

8. Procédé selon l'une des revendications 1 à 7, dans lequel l'élément de géométrie (86, 88) modifié est intégré graphiquement à l'image (30") affichée.

9. Procédé selon l'une des revendications 1 à 8, dans lequel l'élément de géométrie (86, 88) possède des surfaces latérales (90) qui sont perpendiculaires au plan de configuration (74).

10. Procédé selon l'une des revendications 1 à 9, dans lequel une pluralité d'éléments de géométrie (86, 88) sont déterminés et combinés les uns aux autres.

11. Procédé selon l'une des revendications 1 à 10, dans lequel une pluralité de repères de référence (52, 54) sont placés dans la région spatiale (12) et sont acquis avec l'image (30'), et dans lequel une position de référence est déterminée par rapport à chaque repère de référence (52, 54).

12. Procédé selon l'une des revendications 1 à 11, dans lequel l'unité de surveillance (10) comporte au moins une première et une deuxième unité d'acquisition d'image (16, 18) qui sont disposées de manière spatialement décalée l'une par rapport à l'autre et génèrent une première image et une deuxième image (32, 34) partiellement décalée de la région spatiale (12), dans lequel une région d'image (36) commune des première et deuxième images (32, 34) est affichée sous la forme d'une image tridimensionnelle (30).

13. Procédé selon l'une des revendications 1 à 12, dans lequel l'ensemble de données définit une partie (38, 40) de la région spatiale (12) qui correspond à l'élément de géométrie (46, 48, 50), dans lequel un objet (42) est introduit dans la partie (38) de la région spatiale, et dans lequel une image en direct de l'objet (42) est acquise et archivée lors de l'introduction de ce dernier dans la partie (38).

14. Programme d'ordinateur comportant un code de programme qui est conçu pour mettre en oeuvre un procédé selon l'une des revendications 1 à 13 lorsque le programme d'ordinateur est exécuté sur un ordinateur.

15. Dispositif de surveillance destiné à surveiller une région spatiale (12), comportant au moins une unité d'acquisition d'image (16, 18) destinée à générer une image tridimensionnelle (30) de la région spatiale, comportant une unité d'évaluation (20) destinée à déclencher une fonction de commande en fonction de l'image (30), et comportant un appareil de configuration (24) destiné à configurer l'unité d'évaluation (20), dans lequel l'appareil de configuration (24) comporte les éléments suivants :
- un afficheur (28) destiné à afficher l'image tridimensionnelle de la région spatiale (30), **caractérisé par**
- un premier élément de configuration (68) destiné à déterminer une pluralité de points spatiaux (46, 48, 50) dans l'image tridimensionnelle (30),
dans lequel l'image tridimensionnelle est une image de la région spatiale qui contient, en plus d'une image bidimensionnelle, des informations de distance par rapport à des objets individuels ou à la totalité des objets présents dans la région spatiale,
- un deuxième élément de configuration (72) destiné à définir un plan de configuration (74) par utilisation des points spatiaux (46, 48, 50),
- un troisième élément de configuration (84) destiné à générer au moins un élément de géométrie modifiable (86, 88) par rapport au plan de configuration (74), dans lequel le troisième élément (84) est conçu pour intégrer l'élément de géométrie (86, 88) modifiable à l'image (30),
- un quatrième élément de configuration (92) destiné à générer un ensemble de données qui représente une transformation de l'élément géométrique (86, 88) dans la région spatiale, et
- une interface de communication (29) destinée à transmettre l'ensemble de données à l'unité d'évaluation (20), dans lequel l'unité d'évaluation (20) est conçue pour surveiller la région spatiale (12) par utilisation de l'ensemble de données.
